# FASCICULE DE BREVET EUROPEEN

(11) **EP 0 982 221 B1**
(45) Date de publication et mention de la délivrance du brevet: **26.02.2003**
(21) Numéro de dépôt: 99402004.8
(22) Date de dépôt: 06.08.1999
(51) Int. Cl.: B62D 33/06

(54) **Agencement d'une cabine de véhicules routiers**
Anordnung eines Strassenfahrzeugfahrerhauses
Cab arrangement for a road vehicle

(30) Priorité: 06.08.1998 FR 9810113
(43) Date de publication de la demande: 01.03.2000
(73) Titulaire: RENAULT VEHICULES INDUSTRIELS, 69800 Saint Priest (FR)
(72) Inventeur: Bitter, Thomas, 69005 Lyon (FR); Ribouchon, Serge, 38790 Saint George D'Esperanche (FR)
(74) Mandataire: Palix, Stéphane

(56) Documents cités:
- FR-A- 2 348 843
- GB-A- 1 310 056
- US-A- 2 558 470
- US-A- 2 661 233
- US-A- 2 821 427

## Description

L'invention concerne l'agencement d'une cabine de véhicules routiers, et plus particulièrement la cabine de conduite.

Les cabines de véhicules routiers comportent de nombreux éléments destinés à améliorer le confort lors de longs trajets. Les cabines étant de taille réduite l'accumulation des aménagements intérieurs provoque une limitation de l'espace de circulation dans ladite cabine, tel que représenté dans la publication FR-A-2 348 843, qui décrit un agencement de cabine correspondant au préambule de la revendication 1.

De plus les véhicules routiers sont vendus avec un équipement minimum constitué d'un siège conducteur, d'un siège passager et d'une couchette. Hors, dans le transport routier de longue distance, le taux d'équipage, constitué de deux personnes, est très faible. Les véhicules proposés, comportent donc un siège passager prenant de l'espace dans la cabine et n'ayant qu'une utilisation exceptionnelle.

Afin de limiter l'encombrement du siège passager, il est utilisé des sièges pouvant être rabattus contre la planche de bord, tel que décrit dans la publication FR-A-2 348 843. L'ajout de fonctions particulières sur le siège passager destiné uniquement à limiter son encombrement, augmente de façon importante le coût dudit siège.

Afin de pallier ces inconvénients, l'invention a pour objet un agencement de cabine permettant une meilleure adaptation du véhicule à la constitution de l'équipage.

L'invention a également pour objet, un agencement de cabine autorisant la présence d'un siège passager sans pour autant occuper une place importante dans la cabine du véhicule.

Selon une caractéristique de l'invention, l'une des cavités est obturée par un plancher secondaire plan qui s'étend, dans le prolongement de la partie supérieure du tunnel, transversalement de la limite latérale de la cabine vers ladite partie supérieure de tunnel et longitudinalement de la zone de couchage à une paroi avant.

Selon une autre caractéristique de l'invention, la cavité obturée forme un espace de rangement accessible latéralement par l'ouverture d'une porte d'accès à la cabine.

Selon une autre caractéristique de l'invention, la porte délimitant la zone de rangement porte un bac de rangement localisé au-dessus du plancher secondaire en position fermée de ladite porte, qui assure le verrouillage d'une trappe d'accès à ladite zone de rangement à partir de l'intérieur de la cabine.

Selon une autre caractéristique de l'invention, la zone de couchage est formée par une couchette transversalement disposée dans la cabine, et dont le matelas comporte deux parties d'extrémité et une partie centrale indépendante les unes des autres.

Selon une autre caractéristique de l'invention, la zone de couchage comporte une bordure, formant dossier.

Selon une autre caractéristique de l'invention, sous au moins une des parties de la couchette, localisée dans le prolongement du plancher secondaire plan et de la partie supérieure du tunnel, selon une direction sensiblement parallèle à l'axe longitudinale du véhicule, est disposée un tiroir de rangement.

Selon une autre caractéristique de l'invention, la partie centrale, du matelas de la couchette, peut être déplacée suivant une direction parallèle à l'axe longitudinal du véhicule avec le tiroir correspondant.

Selon une autre caractéristique de l'invention, la partie centrale, du matelas de la couchette, et le tiroir correspondant se déplacent avec une partie de la bordure formant dossier.

D'autres caractéristiques et avantages de l'invention apparaîtront à la lecture de la description d'exemples de réalisation d'un agencement d'une cabine de véhicule routier au dessin annexé dans lequel :
- La figure 1 représente une vue perspective de l'intérieur de la cabine du véhicule routier, sans le siège conducteur.
- La figure 2 représente une vue de dessus de l'intérieur de la cabine.
- La figure 3 représente une vue de face de la cabine.

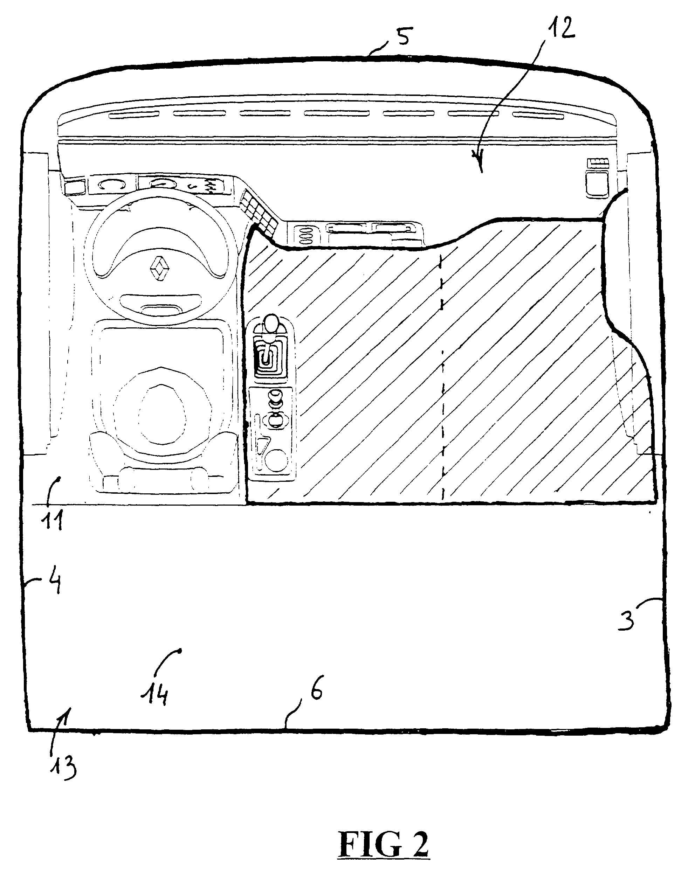

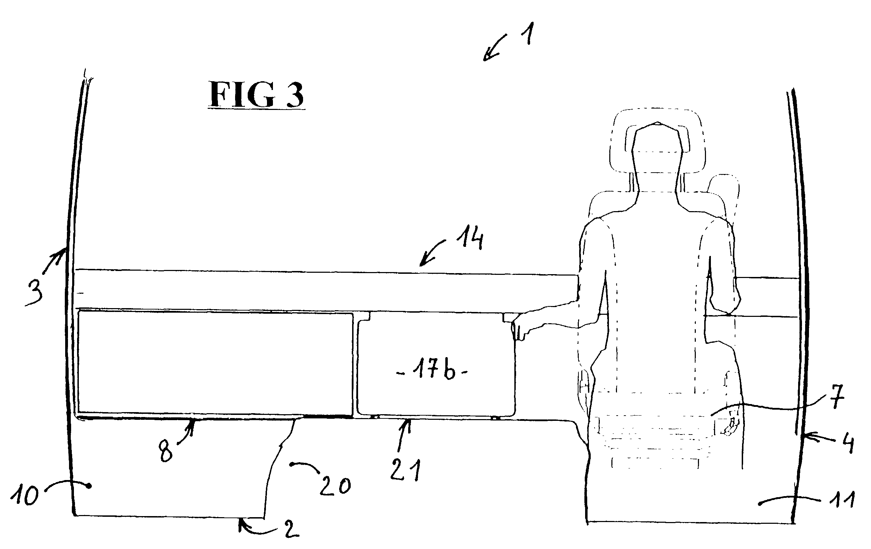

Telle que représentée à la figure 3, la cabine 1 est délimitée par une structure de plancher 2, des parois latérales 3 et 4, une paroi avant 5, une paroi arrière 6 et un pavillon (non représenté). La structure de plancher 2 forme un tunnel 20, orienté longitudinalement dans la partie médiane de la cabine 1, destiné au passage d'éléments mécaniques, par exemple. La proéminence du tunnel 20 dans la cabine 1, forme des cavités 10 et 11 de part et d'autre dudit tunnel 20. Une cavité 11 est utilisée pour installer le poste de conduite et plus particulièrement le siège conducteur 7. La figure 2 représente le poste de conduite localisé dans la cavité gauche 11. Cette localisation étant fonction du pays de vente du véhicule, l'aménagement peut être entièrement déplacé symétriquement par rapport à l'axe médian vertical de la cabine 1.

La cavité droite 10, dans notre exemple, est obturée par un plancher secondaire 8, localisé dans le prolongement de la partie supérieure 21 du tunnel 20, qui s'étend latéralement jusqu'à la paroi latérale 3 qui comporte une porte et longitudinalement de la paroi avant 5 jusqu'à la paroi arrière 6 de délimitation de la cabine 1. L'ensemble plancher secondaire 8 et la partie supérieure du tunnel 21, réalise une vaste zone parfaitement plate, qui permet un déplacement aisé dans la cabine 1.

Le plancher secondaire 8 obturant la seconde cavité, crée une vaste zone de rangement. Le plancher secondaire 8 peut disposer d'une trappe d'accès (non représentée) à la zone de rangement, à partir de l'intérieur de la cabine 1 du véhicule.

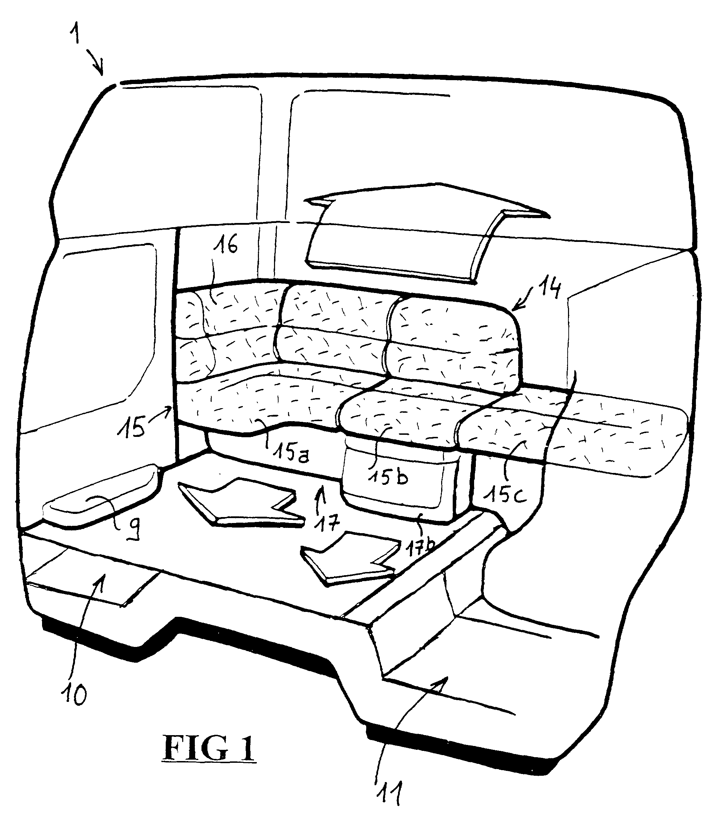

Telle que représentée à la figure 1, la porte de la paroi latérale 3, peut comporter un bac de rangement 9, qui se positionne au-dessus du plancher secondaire 8. Ce bac de rangement 9 peut interdire éventuellement l'accès à la zone de rangement, réalisée sous le plancher secondaire 8, en empêchant l'ouverture de la trappe d'accès par exemple, tant que la porte n'est pas ouverte et que le bac 9 n'est plus localisé au-dessus dudit plancher 8. Tel que représenté aux figures 1 et 3, il est prévu d'autoriser l'accès à la zone de rangement latéralement par ouverture de la porte. Dans ce mode de configuration il peut être utilisé des commodités, non représentées, utilisables à l'arrêt du véhicule et pouvant s'étendre vers l'extérieur de la zone de rangement pour leur utilisation.

La cabine 1 est divisée en une zone avant 12, destinée en particulier au poste de conduite, et une zone arrière 13, destinée au couchage. La zone arrière 13 comporte une couchette 14, transversalement disposée. La couchette 14 est constituée d'un matelas 15 divisé en trois parties, deux parties d'extrémité 15a et 15c et une partie centrale 15b. Le matelas 15 de la couchette 14 est complété par une bordure 16 sensiblement verticale formant dossier. Sous la couchette 14 sont disposé des tiroirs 17 dont l'ouverture s'effectue, par exemple, dans la direction longitudinale du véhicule. Cette ouverture est facilité par la présence du plancher secondaire 8 parfaitement plat. Ce type d'ouverture permet l'utilisation d'un tiroir 17 avec une personne allongée sur la couchette 14, le cas échéant.

La bordure 16 de la couchette 14 formant dossier est relevable afin de dégager la partie assise et disposer ainsi d'une zone de couchage suffisamment large.

La partie centrale 15b de la couchette 14 peut éventuellement se déplacer avec le dossier et le tiroir 17b afin de former un siège passager. L'accès au rangement est réalisé alors par le relèvement de l'assise.

Lors de la commande du véhicule et en fonction des options retenues par le client, un second siège passager, de type classique, peut être facilement prévu. Dans ce cas, il suffit de ne pas installer le plancher secondaire 8 obturant la seconde cavité 10, lors de l'assemblage de la cabine 1.

## Revendications

1. Agencement d'une cabine (1) de véhicule routier, comportant une structure de plancher (2) formant deux cavités (10, 11), susceptibles de recevoir un siège (7), séparées par un tunnel (20) proéminent dans ladite cabine (1), et une zone de couchage, **caractérisé en ce que** l'une des cavités (10) est obturée par un plancher secondaire (8) plan qui s'étend, dans le prolongement de la partie supérieure (21) du tunnel (20), transversalement de la limite latérale (3) de la cabine (1) vers ladite partie supérieure (21) de tunnel (20) et longitudinalement de la zone de couchage à une paroi avant (5).

2. Agencement selon la revendication 1, **caractérisé en ce que** la cavité (10) obturée forme un espace de rangement accessible latéralement par l'ouverture d'une porte d'accès à la cabine (1).

3. Agencement selon la revendication 2, **caractérisé en ce que** la porte délimitant la zone de rangement porte un bac de rangement (9) localisé au-dessus du plancher secondaire (8) en position fermée de ladite porte, qui assure le verrouillage d'une trappe d'accès à ladite zone de rangement à partir de l'intérieur de la cabine (1).

4. Agencement selon la revendication 1, **caractérisé en ce que** la zone de couchage est formée par une couchette (14) transversalement disposée dans la cabine (1), et dont le matelas (15) comporte deux parties d'extrémité (15a, 15c) et une partie centrale (15b) indépendante les unes des autres.

5. Agencement selon la revendication 4, **caractérisé en ce que** la zone de couchage comporte une bordure (16), formant dossier.

6. Agencement selon la revendication 4, **caractérisé en ce que** sous au moins une des parties de la couchette (14), localisée dans le prolongement du plancher secondaire (8) plan et de la partie supérieure du tunnel (21), selon une direction sensiblement parallèle à l'axe longitudinale du véhicule, est disposée un tiroir de rangement (17).

7. Agencement selon les revendications 4 et 6 prisent en combinaison, **caractérisé en ce que** la partie centrale (15b), du matelas de la couchette (14), peut être déplacée suivant une direction parallèle à l'axe longitudinal du véhicule avec le tiroir (17b) correspondant.

8. Agencement selon les revendications 5 et 7 prisent en combinaison, **caractérisé en ce que** la partie centrale (15b), du matelas de la couchette (14), et le tiroir (17b) correspondant se déplacent avec une partie de la bordure (16) formant dossier.

## Patentansprüche

1. Ausgestaltung einer Kabine (1) eines Lastwagens, mit einer Bodenstruktur (2), in der zwei Hohlräume (10,11) ausgebildet sind für die Aufnahme eines Sitzes (7), die durch einen in die Kabine (1) hervorspringenden Tunnel (20) voneinander getrennt sind und mit einem Schlafbereich, **dadurch gekennzeichnet, dass** einer der Hohlräume (10) durch einen zweiten ebenen Boden (8) verschlossen ist, der sich in Verlängerung des oberen Abschnitts (21) des Tunnels (20) in Querrichtung von der seitlichen Begrenzung (3) der Kabine (1) bis zum oberen Abschnitt (21) des Tunnels (20) und in Längsrichtung vom Schlafbereich bis zu einer Vorderwand (5) erstreckt.

2. Ausgestaltung nach Anspruch 1, **dadurch gekennzeichnet, dass** der verschlossene Hohlraum (10) einen Aufnahmeraum bildet, der von der Seite aus durch die Öffnung einer Zugangstür für die Kabine (1) zugänglich ist.

3. Ausgestaltung nach Anspruch 2, **dadurch gekennzeichnet, dass** die den Aufnahmeraum begrenzende Tür einen Aufnahmekasten (9) trägt, der oberhalb des zweiten Bodens (8) in der geschlossenen Stellung der Tür angeordnet ist und der eine Zugangsklappe zum Aufnahmebereich vom Inneren der Kabine (1) aus verriegelt.

4. Ausgestaltung nach Anspruch 1, **dadurch gekennzeichnet, dass** der Schlafbereich durch eine Schlafstelle (14) gebildet wird, die quer in der Kabine (1) angeordnet ist und deren Matratze (15) zwei Endabschnitte (15a, 15c) und einen Mittenabschnitt (15b) aufweist, die unabhängig voneinander sind.

5. Ausgestaltung nach Anspruch 4, **dadurch gekennzeichnet, dass** der Schlafbereich eine Umrandung (16) aufweist, die eine Rücklehne bildet.

6. Ausgestaltung nach Anspruch 4, **dadurch gekennzeichnet, dass** unterhalb wenigstens eines der Abschnitte der Schlafstelle (14) in Verlängerung des zweiten ebenen Bodens (8) und des oberen Abschnitts (21) des Tunnels eine Aufnahmeschublade (17) in einer Richtung, die im wesentlichen parallel zur Längsachse des Fahrzeuges verläuft, angeordnet ist.

7. Ausgestaltung nach Ansprüchen 4 bis 6 in deren Kombination, **dadurch gekennzeichnet, dass** der Mittenabschnitt (15b) der Matratze (14) in einer Richtung parallel zur Längsachse des Fahrzeuges zusammen mit der zugehörigen Schublade (17b) verschiebbar ist.

8. Ausgestaltung nach Ansprüchen 5 und 7, **dadurch gekennzeichnet, dass** der Mittenabschnitt (15b) der Matratze der Schlafstelle (14) und die zugehörige Schublade (17b) zusammen mit einem Abschnitt der die Rücklehne bildenden Umrandung (16) verschiebbar sind.

## Claims

1. Arrangement of a cab (1) of a road vehicle, comprising a floor structure (2) forming two cavities (10, 11) able to receive a seat (7) and separated by a tunnel (20) projecting into the said cab (1), and a sleeping area, **characterized in that** one of the cavities (10) is closed off by a secondary floor (8) which runs, in the continuation of the upper part (21) of the tunnel (20), transversely from the lateral limit (3) of the cab (1) towards the said upper part (1) of the tunnel (20) and longitudinally from the sleeping area to a front wall (5).

2. Arrangement according to Claim 1, **characterized in that** the closed-off cavity (10) forms a storage space accessible from the side by opening a door that gives access to the cab (1).

3. Arrangement according to Claim 2, **characterized in that** the door delimiting the storage area carries a storage tray (9) located above the secondary floor (8) when the said door is in the closed position, which locks a hatch providing access to the said storage area from inside the cab (1).

4. Arrangement according to Claim 1, **characterized in that** the sleeping area is formed of a bunk (14) arranged transversely across the cab (1), and the mattress (15) of which has two end parts (15a, 15c) and a central part (15b) independent of one another.

5. Arrangement according to Claim 4, **characterized in that** the sleeping area has an edging (16) forming a backrest.

6. Arrangement according to Claim 4, **characterized in that**, under at least one of the parts of the bunk (14) located in the continuation of the flat secondary floor (8) and of the upper part of the tunnel (21) in a direction roughly parallel to the longitudinal axis of the vehicle, there is a storage drawer (17).

7. Arrangement according to Claims 4 and 6 taken in combination, **characterized in that** the central part (15b) of the mattress of the bunk (14) can be moved in a direction parallel to the longitudinal axis of the vehicle with the corresponding drawer (17b) .

8. Arrangement according to Claims 5 and 7 taken in combination, **characterized in that** the central part (15b) of the mattress of the bunk (14) and the corresponding drawer (17b) move with part of the edging (16) forming the backrest.
